(19) Europäisches Patentamt / European Patent Office / Office européen des brevets

(11) **EP 3 882 736 A1**

(12) **EUROPEAN PATENT APPLICATION**
published in accordance with Art. 153(4) EPC

(43) Date of publication:
**22.09.2021 Bulletin 2021/38**

(51) Int Cl.:
*G05D 3/20* (2006.01)     *F16M 11/16* (2006.01)

(21) Application number: **18940106.0**

(22) Date of filing: **15.11.2018**

(86) International application number:
**PCT/CN2018/115756**

(87) International publication number:
**WO 2020/097890 (22.05.2020 Gazette 2020/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SZ DJI Technology Co., Ltd.**
**Shenzhen, Guangdong 518057 (CN)**

(72) Inventors:
• **SU, Tie**
  **Shenzhen, Guangdong 518057 (CN)**
• **HAO, Yi**
  **Shenzhen, Guangdong 518057 (CN)**

(74) Representative: **Appelt, Christian W.**
**Boehmert & Boehmert**
**Anwaltspartnerschaft mbB**
**Pettenkoferstrasse 22**
**80336 München (DE)**

(54) **METHOD FOR CONTROLLING HANDHELD GIMBAL, AND HANDHELD GIMBAL**

(57) The present disclosure provides a method for controlling a handheld gimbal and a handheld gimbal. The method for controlling a handheld gimbal includes: upon rotation of a handheld gimbal, obtaining current attitude information of a photographing device and current attitude information of a handle (S301); according to the current attitude information of the photographing device and the current attitude information of the handle, obtaining target attitude information of the photographing device (S302); according to the current attitude information of the photographing device and the target attitude information, controlling a shaft joint of the handheld gimbal to rotate so that the attitude of the photographing device follows the attitude of the handle (S303). Regardless of the attitude of the handle, the attitude of the photographing device can follow the attitude of the handle, which improves accuracy and stability of the control of the handheld gimbal.

Upon rotation of a handheld gimbal, obtain current attitude information of a photographing device and current attitude information of a handle — 301

Obtain target attitude information of the photographing device according to the current attitude information of the photographing device and the current attitude information of the handle — 302

Control shaft joints of the handheld gimbal to rotate according to the current attitude information of the photographing device and the target attitude information, so that the attitude of the photographing device follows the attitude of the handle — 303

FIG. 3

## Description

## TECHNICAL FIELD

The present disclosure relates to the field of intelligent terminal technologies and, more particularly, to a method for controlling a handheld gimbal, and a handheld gimbal.

## BACKGROUND

With popularization of smart mobile terminals, more and more people begin to use handheld gimbals for photography. A handheld gimbal can include: a handle and a three-axis gimbal. The handle is connected to a gimbal base of the three-axis gimbal. A photographing device can be disposed on the three-axis gimbal. The handheld gimbal can control execution of actions of the photographing device in directions such as rotation and pitching, so as to photograph excellent photos and/or videos in various directions.

At present, the handheld gimbal has a three-axis full follow function within a certain rotation range. When an attitude of the handle changes, an attitude of the photographing device can follow the attitude of the handle to change, and keep a relative attitude with the handle unchanged. However, when rotation of the base exceeds a certain range, for example, beyond a range of plus or minus 90 degrees, the photographing device will twitch or flick, causing the handheld gimbal to fail to achieve the three-axis full follow function.

## SUMMARY

The present disclosure provides a method for controlling a handheld gimbal and a handheld gimbal, which realizes a three-axis follow function of a gimbal under any attitude of a handle, and improves accuracy and stability of the control of the handheld gimbal.

In a first aspect, the present disclosure provides a method for controlling a handheld gimbal, including: upon rotation of a handheld gimbal, obtaining current attitude information of a photographing device and current attitude information of a handle; obtaining target attitude information of the photographing device according to the current attitude information of the photographing device and the current attitude information of the handle; and according to the current attitude information of the photographing device and the target attitude information, controlling a shaft joint of the handheld gimbal to rotate, so that the attitude of the photographing device follows the attitude of the handle.

In a second aspect, the present disclosure provides a handheld gimbal, including: a handle, a gimbal, and a photographing device. The gimbal includes a gimbal base and a plurality of shaft joints, each of the shaft joints includes a motor and a shaft arm connected to and driven by the motor, the handle is connected to the gimbal base, and the photographing device is disposed on the gimbal. The gimbal also includes a memory and a processor. The memory is configured to store instructions. The processor is configured to execute the instructions to implement: upon rotation of the handheld gimbal, obtaining current attitude information of the photographing device and current attitude information of the handle; obtaining target attitude information of the photographing device according to the current attitude information of the photographing device and the current attitude information of the handle; and according to the current attitude information of the photographing device and the target attitude information, controlling the shaft joints of the handheld gimbal to rotate, so that the attitude of the photographing device follows the attitude of the handle.

In a third aspect, the present disclosure provides a storage medium, including: a readable storage medium and a computer program. The computer program is configured to implement the method for controlling a handheld gimbal provided by any one of embodiments of the first aspect.

In a fourth aspect, the present disclosure provides a program product. The program product includes a computer program (i.e., execution instructions), and the computer program is stored in a readable storage medium. A processor can read the computer program from the readable storage medium, and the processor executes the computer program to implement the method for controlling a handheld gimbal provided by any one of the embodiments of the first aspect.

The present disclosure provides a method for controlling a handheld gimbal and a handheld gimbal. Upon rotation of the handheld gimbal, the current attitude information of the photographing device and the current attitude information of the handle are obtained. According to the current attitude information of the photographing device and the current attitude information of the handle, the target attitude information of the photographing device is obtained. The shaft joints of the handheld gimbal are controlled to rotate according to the current attitude information of the photographing device and the target attitude information, so that the attitude of the photographing device follows the attitude of the handle. Regardless of the attitude of the handle, the attitude of the photographing device can follow the attitude of the handle, realizing the three-axis follow function of the three-axis gimbal under any attitude of the handle, and improving the accuracy and stability of the control of the handheld gimbal.

## BRIEF DESCRIPTION OF THE DRAWINGS

To illustrate technical solutions in the embodiments of the present disclosure or existing technologies more clearly, the accompanying drawings needed to be used in the embodiments or existing technologies will be briefly described below. It is obvious that the accompanying drawings in the following description are only some embodiments of the present disclosure. For those having ordinary skills in the art, other drawings can be obtained according to these accompanying drawings without inventive efforts.

FIG. 1 is a schematic structural diagram of a handheld gimbal applicable to an embodiment of the present disclosure;

FIG. 2 is a schematic diagram of working principles of a handheld gimbal according to an embodiment of the present disclosure;

FIG. 3 is a flowchart of a method for controlling a handheld gimbal according to an embodiment of the present disclosure;

FIG. 4 is a schematic diagram of attitude changing of a handheld gimbal during a rotating process according to an embodiment of the present disclosure;

FIG. 5 is a schematic diagram of one scenario in which an attitude of a photographing device follows an attitude of a handle according to an embodiment of the present disclosure;

FIG. 6 is a schematic diagram of another scenario in which an attitude of a photographing device follows an attitude of a handle according to an embodiment of the present disclosure;

FIG. 7 is a schematic diagram of principles of a spherical linear interpolation algorithm according to an embodiment of the present disclosure; and

FIG. 8 is a schematic structural diagram of a handheld gimbal according to an embodiment of the present disclosure.

**DETAILED DESCRIPTION OF THE EMBODIMENTS**

To illustrate the objectives, the technical solutions, and the advantages in the embodiments of the present disclosure more clearly, the technical solutions in the embodiments of the present disclosure will be clearly and completely described below with reference to the accompanying drawings in the embodiments of the present disclosure. Obviously, the described embodiments are only a part of the embodiments of the present disclosure, rather than all the embodiments. On the basis of the embodiments of the present disclosure, all other embodiments obtained by those having ordinary skills in the art without inventive efforts should fall within the protection scope of the present disclosure.

The method for controlling a handheld gimbal according to the embodiments of the present disclosure may be applied to devices including a multi-axis gimbal. Exemplarily, in each embodiment of the present disclosure, a handheld gimbal including a three-axis gimbal is taken as an example for illustrative description.

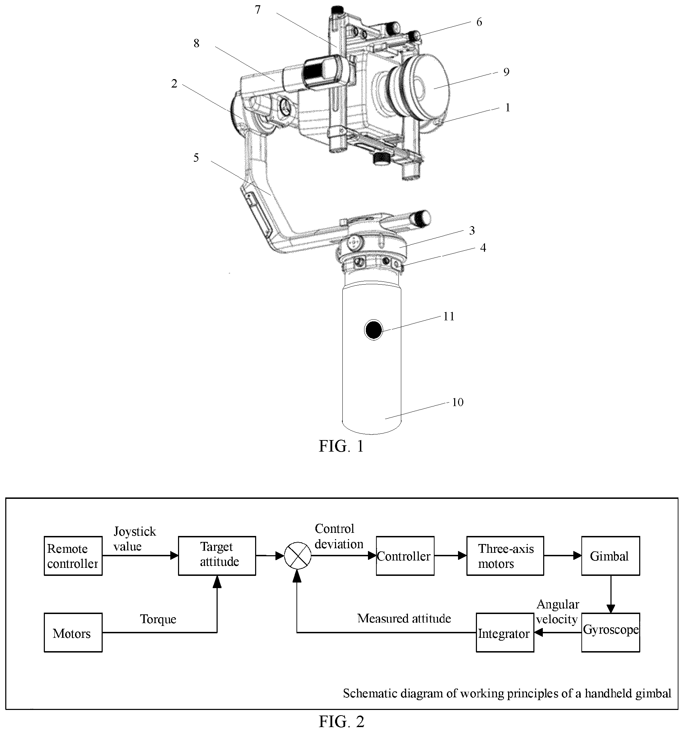

Exemplarily, FIG. 1 is a schematic structural diagram of a handheld gimbal applicable to an embodiment of the present disclosure. As shown in FIG. 1, a handheld gimbal may include a handle 10, a three-axis gimbal, and a photographing device 9.

The handle 10 can be provided with a control button 11 to input a joystick value that controls movements of motors on the three-axis gimbal. It should be noted that implementation of the control button 11 is not limited in this embodiment. For example, the control button 11 may be a joystick.

The three-axis gimbal may include a gimbal base 4 and three shaft joints. The gimbal base 4 is connected to the handle 10. Each shaft joint includes a motor and a shaft arm connected to and driven by the motor. Specifically, the three shaft joints may include a yaw axis shaft joint, a pitch axis shaft joint, and a roll axis shaft joint. The yaw axis is also called the yaw axis or a translation axis, the pitch axis is also called the pitch axis, and the roll axis is also called the roll axis. The yaw axis shaft joint is connected to the gimbal base 4. The yaw axis shaft joint includes a yaw shaft motor 3 and a yaw shaft arm 5 connected to and driven by the yaw shaft motor 3. The roll axis shaft joint includes a roll shaft motor 2 and a roll shaft arm 8 connected to and driven by the roll shaft motor 2. The pitch axis shaft joint includes a pitch shaft motor 1 and a pitch shaft arm 7 connected to and driven by the pitch shaft motor 1.

It should be noted that when attitudes of the handle 10 and the photographing device 9 are different, the yaw shaft motor 3, the roll shaft motor 2, and the pitch shaft motor 1 can rotate relative to axes in different directions in a body coordinate system of the handle 10 and the photographing device 9. For example, in an attitude shown in FIG. 1, the handle 10 is vertical, and an optical axis of the photographing device 9 is horizontal. At this time, relative to the body coordinate system of the photographing device 9, the yaw shaft motor 3 can rotate around the yaw axis of the photographing device 9, the roll shaft motor 2 can rotate around the roll axis of the photographing device 9, and the pitch shaft motor 1 can rotate around the pitch axis of the photographing device 9. If the handle 10 is rotated 90 degrees clockwise, so that the handle 10 is horizontal, and the pitch shaft motor 1 is rotated 90 degrees counterclockwise, so that the optical axis of the photographing device 9 is still horizontal. At this time, relative to the body coordinate system of the photographing device 9, the yaw shaft motor 3 can rotate around the roll axis of the photographing device 9, the roll shaft motor 2 can rotate around the yaw axis of the photographing device 9, and the pitch shaft motor 1 can rotate around the pitch axis of the photographing device 9. Specifically, the handle 10 generally includes a front and a back. The front is usually provided with functional operating elements such as a joystick, and the back opposite to the front can be provided with some function keys, such as shortcut keys. When photographing an object in front, a lens of the photographing device 9 faces a direction that the back of the handle 10 faces.

If a direction of the object in front that the photographing device 9 faces, that is, the direction that the back of the handle 10 faces, is called as a front direction, then the above-mentioned rotating the handle 10 90 degrees clockwise to make the handle 10 horizontal is to tilt the handle 10 forward 90 degrees down.

Since the photographing device 9 follows the handle 10 to move, when the handle 10 is tilted forward 90 degrees down, if the initial attitude of the photographing device 9 is facing forward and the optical axis is horizontal, then the photographing device 9 is rotated to a position facing downward at this time. To enable the photographing device 9 to photograph the object in front, the pitch shaft motor is controlled to rotate 90 degrees. At this time, the optical axis of the photographing device 9 is parallel to or coincides with the axis of the handle 10, and it is in a flashlight mode.

It is understandable that before the handle 10 is rotated, the pitch shaft motor can be controlled to rotate to drive the photographing device 9 to rotate so that the optical axis of the photographing device 9 is parallel or coincident with the axis of the handle 10. Next the handle 10 is rotated to tilt forward, the photographing device 9 follows to move, and finally it is adjusted to the flashlight mode.

Optionally, the handheld gimbal may include a photographing device fixing mechanism 6 for fixing the photographing device 9. The embodiments of the present disclosure do not limit a shape and position of the photographing device fixing mechanism 6. Optionally, an inertial measurement element may be provided in the photographing device fixing mechanism 6. Optionally, the inertial measurement element may be a gyroscope, an accelerometer, etc.

FIG. 2 is a schematic diagram of working principles of a handheld gimbal according to an embodiment of the present disclosure. As shown in FIG. 2, the handheld gimbal can use the inertial measurement element as a feedback device and the motors as output elements to form a closed-loop control system. In this control system, control quantity is the attitude of the handheld gimbal, including the attitude of the handle and/or the attitude of the photographing device. Given a target attitude, a measured attitude can be achieved through the feedback control to reach the target attitude. Specifically, the target attitude can be obtained through a joystick value output by a controller and torque output by the motors. The controller in the handheld gimbal can control movement of the three shaft motors and realize attitude changing of the three-axis gimbal. The measured attitude can be obtained through measurement of the gyroscope. Furthermore, according to the target attitude and the measured attitude, the controller can further control the movement of the three shaft motors, so that the measured attitude reaches the target attitude and realizes the closed-loop control. The controller may include the joystick set on the handle, or other controllers connected to the handheld gimbal.

It should be noted that the embodiments of the present disclosure do not limit a connection mode of the photographing device 9 and the three-axis gimbal. Optionally, the photographing device 9 may be fixedly set on the three-axis gimbal. Optionally, the photographing device 9 can be detachably set on the three-axis gimbal.

It should be noted that the embodiments of the present disclosure do not limit a type of the photographing device 9. For example, the photographing device 9 may be a camera, a video camera, a smart phone, and so on. Optionally, the photographing device 9 may include an inertial measurement unit.

It should be noted that the embodiments of the present disclosure do not limit shapes of the handle 10 and the control button 11 provided on the handle 10, and do not limit a location of the control button 11 on the handle 10.

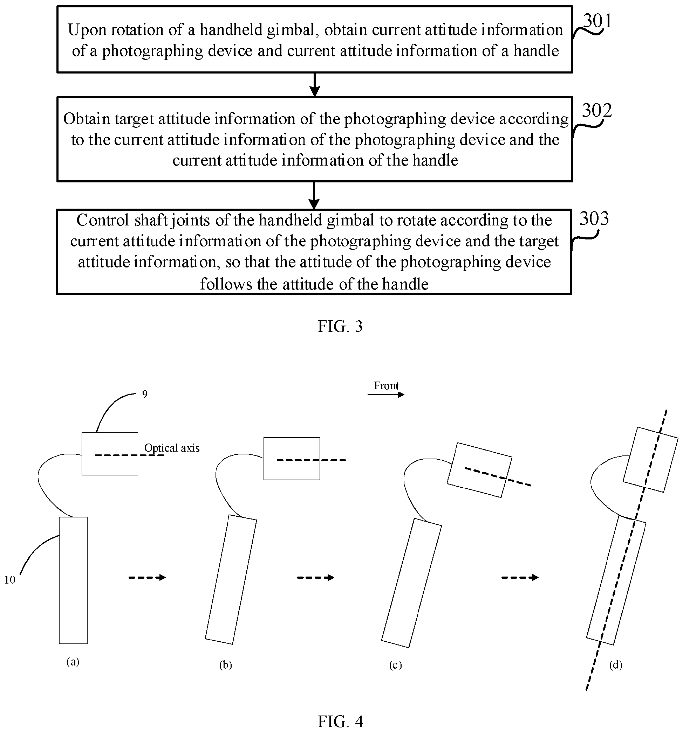

FIG. 3 is a flowchart of a method for controlling a handheld gimbal according to an embodiment of the present disclosure. In a method for controlling a handheld gimbal provided in this embodiment, an execution subject may be a handheld gimbal. As shown in FIG. 3, the method for controlling a handheld gimbal provided in this embodiment may include:

S301: Upon rotation of the handheld gimbal, obtain current attitude information of the photographing device and current attitude information of the handle.

Specifically, during a rotating process of the handheld gimbal, both the attitude of the photographing device and the attitude of the handle change. Moreover, the attitude of the photographing device may change relatively to the attitude of the handle. Exemplarily, FIG. 4 is a schematic diagram of attitude changing of a handheld gimbal during a rotating process according to an embodiment of the present disclosure. As shown in FIG. 4, state (a) shows an initial state of the handheld gimbal. At this time, the handle 10 is vertical, the optical axis of the photographing device 9 is horizontal, and the photographing device 9 faces forward. When the handheld gimbal rotates forward, current state is (b). At this time, the handle 10 is vertical, and the optical axis of the photographing device 9 is horizontal. The attitude of the photographing device 9 is changed relatively to the attitude of the handle 10. The current attitude information of the photographing device 9 and the current attitude information of the handle 10 can be obtained for subsequent processing.

It should be noted that this embodiment does not limit the initial attitudes of the photographing device 9 and the handle 10.

Optionally, before the rotation of the handheld gimbal, the optical axis of the photographing device and the axis of the handle can be parallel or coincident.

Optionally, the attitude information may include a quaternion.

The so-called quaternion refers to a simple super complex number. A complex number is composed of a real number plus an imaginary unit i, where $i^2=-1$. Similarly, the quaternion is composed of a real number plus three imaginary units i, j, and k. Moreover, they have following relationships: $i^2=j^2=k^2=-1$, and $i^0=j^0=k^0=1$. Each quaternion is a linear combination of 1, i, j, and k. The quaternion can generally be expressed as a+bk+cj+di, where a, b, c, and d are real numbers. In different applications, a specific form of the quaternion can be different.

S302: Obtain target attitude information of the photographing device according to the current attitude information of the photographing device and the current attitude information of the handle.

Specifically, because for the handheld gimbal during the rotating process, the attitude of the photographing device changes relatively to the attitude of the handle, therefore the target attitude information of the photographing device can be obtained according to the current attitude information of the photographing device and the current attitude information of the handle. The target attitude information is an attitude that the photographing device is expected to realize, so that the attitude of the photographing device follows the attitude of the handle.

Optionally, the target attitude information may be intermediate attitude information in a process that the attitude of the photographing device follows the attitude of the handle, or the current attitude information of the handle.

Optionally, when the method for controlling a handheld gimbal according to this embodiment adjusts the attitude of the photographing device in real time at a preset frequency to follow the attitude of the handle, the intermediate attitude information may be real-time attitudes of the handle according to the preset frequency when the handheld gimbal is rotated.

It should be noted that this embodiment does not limit a specific value of the preset frequency.

The attitude of the photographing device follows the attitude of the handle, which means that the attitude of the photographing device remains unchanged relatively to the attitude of the handle.

S303: Control the shaft joints of the handheld gimbal to rotate according to the current attitude information of the photographing device and the target attitude information, so that the attitude of the photographing device follows the attitude of the handle.

Specifically, since the current attitude information of the photographing device and the target attitude information that the photographing device is expected to realize have been obtained, operation of at least one motor of the three-axis gimbal can be controlled according to the current attitude information and the target attitude information of the photographing device. The three-axis gimbal drives the photographing device to move, so that the photographing device reaches the expected target attitude, to realize that the attitude of the photographing device follows the attitude of the handle.

Referring to FIG. 4, state (b) is the attitude of the handheld gimbal at current moment. At this time, the attitude of the photographing device does not follow the attitude of the handle. According to the attitude information of the photographing device and the attitude information of the handle in (b), the target attitude information of the photographing device can be obtained. Furthermore, according to the attitude information of the photographing device in (b) and the obtained target attitude information, it is finally possible to realize that the attitude of the photographing device follows the attitude of the handle, that is, state (c). Here, in state (a) and state (c), the attitude of the photographing device relative to the attitude of the handle remains unchanged.

It should be noted that, according to structures of the handheld gimbal and a processing speed of a processor, a speed at which the attitude of the photographing device follows the attitude of the handle can be different, and effects presented are also different.

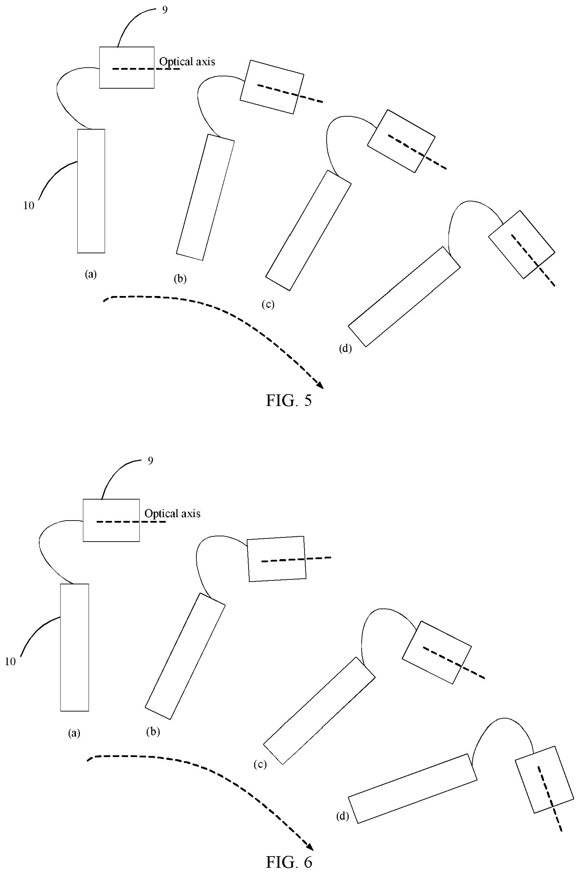

Optionally, FIG. 5 is a schematic diagram of one scenario in which an attitude of a photographing device follows an attitude of a handle according to an embodiment of the present disclosure. For example, when the handheld gimbal is lighter in weight, simple in structures, and the processor has a higher processing speed, real-time follow-up can be achieved. As shown in FIG. 5, during the rotating process of the handheld gimbal, the attitude of the photographing device can follow the attitude of the handle at the positions (a), (b), (c) and (d).

Optionally, FIG. 6 is a schematic diagram of another scenario in which an attitude of a photographing device follows an attitude of a handle according to an embodiment of the present disclosure. For example, when the weight of the handheld gimbal is heavier, the structures are complicated, and the processing speed of the processor is slow, the attitude of the photographing device can follow the attitude of the handle at the end. As shown in FIG. 6, during the rotating process of the handheld gimbal, at the positions (b) and (c), the attitude of the photographing device does not follow the attitude of the handle. However, at the position (d), after a period of delay, it is finally realized that the attitude of the photographing device follows the attitude of the handle.

It can be seen that the method for controlling a handheld gimbal according to this embodiment can determine the target attitude that the photographing device is expected to achieve by obtaining the current attitude information of the photographing device and the handle. Furthermore, according to the current attitude information of the photographing device and the target attitude information, the motors are controlled to operate. During the rotating process of the handheld gimbal, no matter what the attitude of the handle is, the attitude of the photographing device can follow the attitude of the handle, realizing the three-axis follow function of the three-axis gimbal under any attitude of the handle, and improving the accuracy and stability of the control of the handheld gimbal.

Optionally, in S301, obtaining the current attitude information of the handle may include: obtaining historical attitude information of the photographing device before the rotation of the handheld gimbal, and a rotation angle corresponding to at least one shaft joint respectively on the handheld gimbal in the body coordinate system of the photographing device; and according to the historical attitude information and the rotation angle, obtaining the current attitude information of the handle.

The following is an example to illustrate.

As shown in FIG. 4, a state of the handheld gimbal before rotation is (a). Since the photographing device 9 is provided with the inertial measurement element, or the photographing device fixing mechanism 6 shown in FIG. 1 is provided with the inertial measurement element, the attitude information of the photographing device can be obtained. The historical attitude information of the photographing device before the rotation of the handheld gimbal is specifically the attitude information of the photographing device 9 in (a). Optionally, the at least one shaft joint on the handheld gimbal may include the pitch axis shaft joint (the pitch axis shaft joint), the roll axis shaft joint (the roll axis shaft joint), and the yaw axis shaft joint (the yaw axis shaft joint). According to the attitude information of the photographing device 9 in (a) and the rotation angle corresponding to the at least one shaft joint on the handheld gimbal in the body coordinate system of the photographing device, the current attitude information of the handle can be obtained.

Obtaining the attitude information of the handle through the attitude information of the photographing device and the rotation angle of the gimbal simplifies configuration complexity of the inertial measurement element on the handheld gimbal, simplifies the structures of the handheld gimbal, and facilitates implementation.

Optionally, obtaining the current attitude information of the handle based on the historical attitude information and the rotation angle may include: determining a quaternion corresponding to the at least one shaft joint according to the rotation angle corresponding to the at least one shaft joint respectively; and according to a quaternion corresponding to the historical attitude information of the photographing device and the quaternion corresponding to the at least one shaft joint respectively, obtaining the current attitude information of the handle.

The following is an example to illustrate.

It is assumed that the at least one shaft joint includes the pitch axis shaft joint, the roll axis shaft joint, and the yaw axis shaft joint. A quaternion corresponding to the pitch axis shaft joint is q_pitch, a quaternion corresponding to the roll axis shaft joint is q_roll, and a quaternion corresponding to the yaw axis shaft joint is q_yaw. The quaternion is defined as $q = (cos\frac{\theta}{2}$ , $sin\frac{\theta}{2}V1, sin\frac{\theta}{2}V2, sin\frac{\theta}{2}V3)$. $\theta$ represents the rotation angle of the shaft joint. V1, V2, V3 represent axis vectors of the shaft joint, and the modulus is 1.

In the body coordinate system, for rotation around the pitch axis, values of the vectors V1, V2, and V3 are (0,1,0).

$$q\_pitch = (cos\frac{\theta p}{2} , 0, sin\frac{\theta p}{2}, 0)$$

$\theta p$ represents the rotation angle of the pitch axis shaft joint.

In the same way, for rotation around the roll axis, the values of the vectors V1, V2, and V3 are (1,0,0).

$$q\_roll = (cos\frac{\theta r}{2} , sin\frac{\theta r}{2}, 0, 0)$$

$\theta r$ represents the rotation angle of the roll axis shaft joint.

For rotation around the yaw axis, the values of the vectors V1, V2, and V3 are (0,0,1).

$$q\_yaw = (cos\frac{\theta y}{2} , 0, 0, sin\frac{\theta y}{2})$$

$\theta y$ represents the rotation angle of the yaw axis shaft joint.

The current attitude information of the handle q_base=q_camera * q _pitch *q_roll*q _yaw. Here, q_camera represents the quaternion corresponding to the historical attitude information of the photographing device.

It can be understood that if an attitude acquisition element such as an inertial measurement element is also provided on the handle, real-time attitude of the handle can be directly obtained.

Optionally, in S302, obtaining the target attitude information of the photographing device according to the current attitude information of the photographing device and the current attitude information of the handle may include: obtaining a follow-up time, that the follow-up time is a time interval from an end of the rotation of the handheld gimbal until the attitude of the photographing device follows the attitude of the handle; and according to the current attitude information of the photographing device, the current attitude information of the handle, and the follow-up time, obtaining the target attitude information of the photographing device by using an interpolation algorithm.

Specifically, the follow-up time reflects a follow-up speed that the attitude of the photographing device follows the attitude of the handle. The longer the follow-up time is set, the slower the follow-up speed and the more stable the follow-up effect. The shorter the follow-up time is set, the faster the follow-up speed. This embodiment does not limit a specific value of the follow-up time. The follow-up time can be a preset value, or a value input by a user, or a value determined according to the computing speed of the processor.

Through the current attitude information of the photographing device, the current attitude information of the handle, and the follow-up time, the interpolation algorithm can be used to obtain the target attitude information of the photographing device, so to realize that the attitude of the photographing device follows the attitude of the handle. The follow-up speed and follow-up stability can be weighed.

It should be noted that this embodiment does not limit a specific implementation of the interpolation algorithm.

The so-called interpolation algorithm, also known as "interpolation method", uses function values of a function f(x) at several known points in a certain interval to make an appropriate specific function, and uses values of this specific function as approximate values of the function f(x) at other points in the interval.

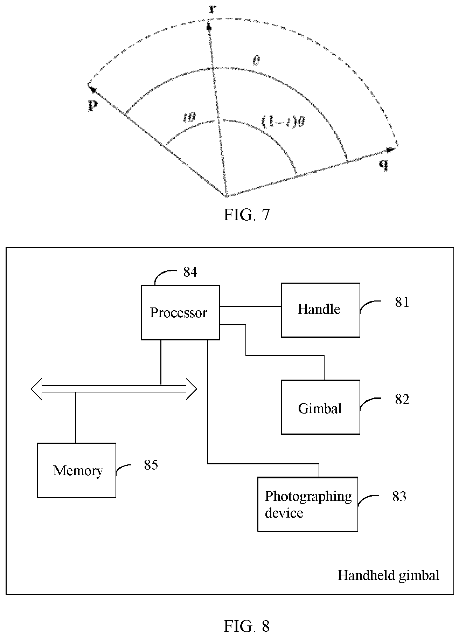

The following takes the interpolation algorithm as a spherical linear interpolation algorithm as an example for description. Referring to FIG. 7, FIG. 7 is a schematic diagram of principles of a spherical linear interpolation algorithm according to an embodiment of the present disclosure.

The spherical linear interpolation (Slerp) algorithm is a linear interpolation operation of quaternions, mainly used to smoothly interpolate between two quaternions that represent rotation. A general formula of interpolation can be written as $\mathbf{r}=a(t)\mathbf{p}+b(t)\mathbf{q}$, to find appropriate a(t) and b(t). As shown in FIG. 7, an angle between a vector $\mathbf{p}$ and a vector $\mathbf{q}$ is $\theta$, an angle between the vector $\mathbf{p}$ and a vector $\mathbf{r}$ is $t\theta$, and an angle between the vector $\mathbf{q}$ and the vector $\mathbf{r}$ is $(1-t)\theta$.

A specific calculation process is as follows.

Both sides of the above formula are dot multiplied by $\mathbf{p}$ to get:

$$\mathbf{p}\cdot\mathbf{r}=a(t)\mathbf{p}\cdot\mathbf{p}+b(t)\,\mathbf{p}\cdot\mathbf{q},\ \cos t\theta=a(t)+b(t)\,\cos\theta.$$

Similarly, both sides of the above formula are dot multiplied by q to get:

$$\cos[(1-t)\theta]=a(t)\,\cos\theta+b(t).$$

Two equations can solve two unknown quantities a(t) and b(t):

$$a(t)=\frac{\cos t\theta-\cos[(1-t)\theta]\cos\theta}{1-\cos^2\theta};$$

and

$$b(t)=\frac{\cos[(1-t)\theta]-\cos t\theta\cos\theta}{1-\cos^2\theta}.$$

Using the trigonometric functions, the formulas can be simplified to:

$$a(t)=\frac{\sin[(1-t)\theta]}{\sin\theta};$$

and

$$b(t)=\frac{\sin t\theta}{\sin\theta}.$$

Therefore, the spherical linear interpolation formula of quaternions is:

$$\mathrm{Slerp}(\mathbf{p},\mathbf{q},t)=\frac{\sin[(1-t)\theta]\mathbf{p}+\sin t\theta\,\mathbf{q}}{\sin\theta}.$$

Here, Slerp() represents a spherical interpolation function.

In this embodiment, the vector **p** can be understood as the attitude of the photographing device, and the vector **q** can be understood as the attitude of the handle. The Slerp algorithm is used to establish a functional relationship between the vector **p** and the vector **q** added with a time variable, and **r** can be understood as the target attitude of the photographing device at time t.

Through the above method, the real-time dynamic target attitude of the photographing device can be obtained during the moving process, so that the photographing device can better follow the handle.

With this method, no matter when the handle tilts forward and moves to the flashlight mode, or the handle rotates down to both sides, the photographing device can follow the handle without causing control disorder.

It can be understood that using this method can ensure that the photographing device can follow the handle well when any device of the handheld gimbal rotates.

Optionally, if the method for controlling a handheld gimbal according to this embodiment adjusts the attitude of the photographing device in real time at the preset frequency to follow the attitude of the handle, the follow-up time is a single time period of the preset frequency.

Optionally, the method for controlling a handheld gimbal according to this embodiment may further include: obtaining a directional cosine matrix according to the target attitude information; obtaining an attitude corresponding to the pitch axis in the body coordinate system of the photographing device according to the directional cosine matrix; and according to the target attitude information and the attitude corresponding to the pitch axis, controlling the shaft joints of the handheld gimbal to rotate so that the optical axis of the photographing device is parallel or coincident with the axis of the handle.

The directional cosine matrix is a matrix formed by directional cosines between basis vectors of two different sets of orthonormal bases. The directional cosine matrix can be used to express a relationship between one set of orthonormal bases and another set of orthonormal bases, and it can also be used to express the directional cosines of a vector to another set of orthonormal bases. In analytic geometry, three directional cosines of a vector are cosines of angles between the vector and three coordinate axes. The directional cosine between two vectors refers to cosine of an angle between the two vectors.

For an example, please refer to FIG. 4. As shown in FIG. 4, states (a) to (c) can realize that the attitude of the photographing device follows the attitude of the handle. In state (d), according to the target attitude information and the attitude corresponding to the pitch axis, the shaft joints of the handheld gimbal can be controlled to rotate so that the optical axis of the photographing device is parallel or coincident with the axis of the handle.

It can be seen that through the above steps, when the handle is in any attitude, the optical axis of the photographing device can be parallel or coincident with the axis of the handle, so as to provide support for a roll and flip 360 degrees mode of the photographing device, so that the photographing device can be controlled to rotate around a center of its own optical axis, when the handle is in any attitude, which improves the accuracy and feasibility of the control of the handheld gimbal.

It should be noted that this embodiment does not limit an execution order to perform the step of making the optical axis of the photographing device parallel or coincident with the axis of the handle and the steps of making the attitude of the photographing device follow the attitude of the handle (that is, the above steps S301 to S303). Optionally, in an implementation manner, the step of making the optical axis of the photographing device parallel or coincident with the axis of the handle is after the steps of making the attitude of the photographing device follow the attitude of the handle. As shown in FIG. 4, at this time, the state changes can be (a), (b), (c), (d) in sequence. Optionally, in another implementation manner, the step of making the optical axis of the photographing device parallel or coincident with the axis of the handle is before the steps of making the attitude of the photographing device follow the attitude of the handle. As shown in FIG. 4, at this time, the state changes can be (a), (d), (b), (c) in sequence. But at this time, when the attitude following is implemented in (b) and (c), eventually, the optical axis of the photographing device will be parallel or coincide with the axis of the handle.

Optionally, the attitude corresponding to the pitch axis may include a quaternion corresponding to the pitch axis.

Optionally, obtaining the attitude corresponding to the pitch axis in the body coordinate system of the photographing device according to the directional cosine matrix may include:

    according to the directional cosine matrix and axis vectors of the pitch axis in the body coordinate system, obtaining axis vectors of the pitch axis in a geodetic coordinate system;
    obtaining a rotation angle of the pitch axis; and
    according to the axis vectors of the pitch axis in the geodetic coordinate system and the rotation angle of the pitch axis, obtaining the attitude corresponding to the pitch axis.

The following is an example to illustrate.

Assume that the directional cosine matrix R_tar is:

$$\begin{vmatrix} V_{11} & V_{12} & V_{13} \\ V_{21} & V_{22} & V_{23} \\ V_{31} & V_{32} & V_{33} \end{vmatrix}.$$

Using R_tar*Vb = Vs, the axis vectors Vs=(xs,ys,zs) in the geodetic coordinate system can be obtained. Here, Vb=(xb,yb,zb) represents the axis vectors in the body coordinate system.

The axis vectors of the pitch axis in the body coordinate system are (0,1,0). Then, the axis vectors of the pitch axis in the geodetic coordinate system are the second column in the directional cosine matrix R_tar, specifically Vs=($V_{12}$, $V_{22}$, $V_{32}$).

After obtaining the rotation angle θ of the pitch axis, the attitude corresponding to the pitch axis can be obtained according to the axis vectors Vs of the pitch axis in the geodetic coordinate system and the rotation angle θ of the pitch axis. The attitude corresponding to the pitch axis can be represented by a quaternion. Specifically,

$$q\_pitch = (\cos\frac{\theta}{2}, \sin\frac{\theta}{2}V_{12}, \sin\frac{\theta}{2}V_{22},$$

$$\sin\frac{\theta}{2}V_{32}).$$

When the optical axis of the photographing device is parallel or coincident with the axis of the handle, a quaternion corresponding to the attitude of the photographing device is q_tar_final = q_pitch*q_tar. Here, q_tar represents the quaternion of the target attitude information of the photographing device.

It should be noted that this embodiment does not limit a specific value of the rotation angle of the pitch axis.

Optionally, the method for controlling a handheld gimbal according to this embodiment may further include: obtaining an attitude corresponding to the yaw axis in the body coordinate system of the photographing device according to the directional cosine matrix; and according to the target attitude information, the attitude corresponding to the pitch axis and the attitude corresponding to the yaw axis, controlling the shaft joints of the handheld gimbal to rotate, to roll and rotate the photographing device around its optical axis.

Specifically, after achieving the above-mentioned making the optical axis of the photographing device parallel or coincident with the axis of the handle and realizing that the attitude of the photographing device follows the attitude of the handle, the shaft joints of the handheld gimbal can be controlled to rotate, according to the target attitude information, the attitude corresponding to the pitch axis, and the attitude corresponding to the yaw axis, so that the photographing device rolls and rotates around its optical axis. When the handle is in any attitude, the photographing device can be controlled to rotate around the center of its own optical axis, which improves the accuracy and feasibility of the control of the handheld gimbal.

Optionally, obtaining the attitude corresponding to the yaw axis in the body coordinate system of the photographing device according to the directional cosine matrix may include: according to the directional cosine matrix and axis vectors of the yaw axis in the body coordinate system, obtaining axis vectors of the yaw axis in the geodetic coordinate system; obtaining a rotation angle of the yaw axis; and according to the axis vectors of the yaw axis in the geodetic coordinate system and the rotation angle of the yaw axis, obtaining the attitude corresponding to the yaw axis.

The above directional cosine matrix R_tar is also taken as an example for description.

The axis vectors of the yaw axis in the body coordinate system are (0,0,1). Then, the axis vectors of the yaw axis in the geodetic coordinate system are the third column in the directional cosine matrix R_tar, specifically Vs=($V_{13}$, $V_{23}$, $V_{33}$).

After obtaining the rotation angle $\theta$ of the yaw axis, the attitude corresponding to the yaw axis can be obtained according to the axis vectors Vs of the yaw axis in the geodetic coordinate system and the rotation angle $\theta$ of the yaw axis. The attitude corresponding to the yaw axis can be represented by a quaternion. Specifically,

$$\text{q\_yaw} = (\cos\frac{\theta}{2}, \sin\frac{\theta}{2}V_{13}, \sin\frac{\theta}{2}V_{23}, \sin\frac{\theta}{2}V_{33})$$

.

When the photographing device rolls around its optical axis, the quaternion corresponding to the attitude of the photographing device is q_tar_final = q_yaw*q_pitch*q_tar. Here, q_tar represents the quaternion of the target attitude information of the photographing device.

It should be noted that this embodiment does not limit a specific value of the rotation angle of the yaw axis.

Optionally, obtaining the rotation angle of the yaw axis may include: obtaining an angular velocity input when the user operates the joystick on the handle; and obtaining the rotation angle of the yaw axis by performing integration by using the angular velocity.

This embodiment provides a method for controlling a handheld gimbal, which includes: upon rotation of the handheld gimbal, obtaining the current attitude information of the photographing device and the current attitude information of the handle; obtaining the target attitude information of the photographing device, according to the current attitude information of the photographing device and the current attitude information of the handle; and controlling the shaft joints of the handheld gimbal to rotate according to the current attitude information of the photographing device and the target attitude information, so that the attitude of the photographing device follows the attitude of the handle. The method for controlling a handheld gimbal according to this embodiment can determine the target attitude of the photographing device by obtaining the current attitude information of the photographing device and the handle, and control the motors to operate. The attitude of the photographing device can follow the attitude of the handle regardless of the attitude of the handle. The three-axis follow function of the three-axis gimbal is realized under any attitude of the handle, and the accuracy and stability of the control of the handheld gimbal is improved.

FIG. 8 is a schematic structural diagram of a handheld gimbal according to an embodiment of the present disclosure. As shown in FIG. 8, a handheld gimbal according to this embodiment is configured to execute the method for controlling a handheld gimbal according to the embodiments shown in FIG. 3 to FIG. 7. As shown in FIG. 8, the handheld gimbal according to this embodiment may include: a handle 81, a gimbal 82, and a photographing device 83.

The gimbal 82 includes a gimbal base and a plurality of shaft joints, and each shaft joint includes a motor and a shaft arm connected to and driven by the motor. The handle 81 is connected to the gimbal base. The photographing device 83 is set on the gimbal.

The gimbal also includes a memory 85 and a processor 84.

The memory 85 is configured to store instructions.

The processor 84 is configured to execute the instructions to implement: upon rotation of the handheld gimbal, obtaining the current attitude information of the photographing device and the current attitude information of the handle; according to the current attitude information of the photographing device and the current attitude information of the handle, obtaining the target attitude information of the photographing device; and according to the current attitude information of the photographing device and the target attitude information, controlling the shaft joints of the handheld gimbal to rotate so that the attitude of the photographing device follows the attitude of the handle.

Optionally, the processor 84 is specifically configured to: obtain the historical attitude information of the photographing device before the rotation of the handheld gimbal, and the rotation angle corresponding to the at least one shaft joint on the handheld gimbal in the body coordinate system of the photographing device; and according to the historical attitude information and the rotation angle, obtain the current attitude information of the handle.

Optionally, the processor 84 is specifically configured to: determine the quaternion corresponding to the at least one shaft joint according to the rotation angle corresponding to the at least one shaft joint; and according to the quaternion corresponding to the historical attitude information of the photographing device and the quaternion corresponding to the at least one shaft joint, obtain the current attitude information of the handle.

Optionally, the at least one shaft joint includes: the pitch axis shaft joint, the roll axis shaft joint, and the yaw axis shaft joint.

Optionally, the processor 84 is specifically configured to: obtain the follow-up time, which is the time interval from the end of the rotation of the handheld gimbal until the attitude of the photographing device follows the attitude of the handle; and according to the current attitude information of the photographing device, the current attitude information of the handle, and the follow-up time, obtain the target attitude information of the photographing device by using the interpolation algorithm.

Optionally, the processor 84 adjusts the attitude of the photographing device in real time at the preset frequency to follow the attitude of the handle, and the follow-up time is the single time period of the preset frequency.

Optionally, the interpolation algorithm is the spherical linear interpolation algorithm.

Optionally, the processor 84 is also configured to: obtain the directional cosine matrix according to the target attitude information; obtain the attitude corresponding to the pitch axis in the body coordinate system of the photographing device according to the directional cosine matrix; and according to the target attitude information and the attitude corresponding to the pitch axis, control the shaft joints of the handheld gimbal to rotate so that the optical axis of the photographing device is parallel or coincident with the axis of the handle.

Optionally, the processor 84 is specifically configured to: according to the directional cosine matrix and the axis vectors of the pitch axis in the body coordinate system, obtain the axis vectors of the pitch axis in the geodetic coordinate system; obtain the rotation angle of the pitch axis; and according to the axis vectors of the pitch axis in the geodetic coordinate system and the rotation angle of the pitch axis, obtain the attitude corresponding to the pitch axis.

Optionally, the processor 84 is also configured to: obtain the attitude corresponding to the yaw axis in the body coordinate system of the photographing device according to the directional cosine matrix; and according to the target attitude information, the attitude corresponding to the pitch axis and the attitude corresponding to the yaw axis, control the shaft joints of the handheld gimbal to rotate, to roll and rotate the photographing device around its optical axis.

Optionally, the processor 84 is specifically configured to: according to the directional cosine matrix and the axis vectors of the yaw axis in the body coordinate system, obtain the axis vectors of the yaw axis in the geodetic coordinate system; obtain the rotation angle of the yaw axis; and according to the axis vectors of the yaw axis in the geodetic coordinate system and the rotation angle of the yaw axis, obtain the attitude corresponding to the yaw axis.

Optionally, the processor 84 is specifically configured to: obtain the angular velocity input when the user operates the joystick on the handle; and obtain the rotation angle of the yaw axis by performing integration by using the angular velocity.

Optionally, the target attitude information is the intermediate attitude information in the process that the attitude of the photographing device follows the attitude of the handle, or the current attitude information of the handle.

The handheld gimbal according to this embodiment is configured to implement the method for controlling a handheld gimbal according to the embodiments shown in FIG. 3 to FIG. 7. Technical principles and effects are similar, and will not be repeated here.

A person of ordinary skill in the art can understand that all or part of the steps in the foregoing method embodiments can be implemented by relevant hardware instructed by a program. The aforementioned program can be stored in a computer readable storage medium. When the program is executed, steps including the foregoing method embodiments are executed; and the foregoing storage medium includes: a ROM, a RAM, a magnetic disk, or an optical disk, and other media that can store program codes.

Finally, it should be noted that the above embodiments are only used to illustrate the technical solutions of the present disclosure, but not to limit it. Although the present disclosure has been described in detail with reference to the foregoing embodiments, those of ordinary skill in the art should understand: it is still possible to modify the technical solutions described in the foregoing embodiments, or equivalently replace some or all of the technical features; and these modifications or replacements do not make essence of the corresponding technical solutions deviate from the scope of the technical solutions of the embodiments of the present disclosure.

**Claims**

1. A method for controlling a handheld gimbal, comprising:

   upon rotation of a handheld gimbal, obtaining current attitude information of a photographing device and current attitude information of a handle;
   obtaining target attitude information of the photographing device according to the current attitude information of the photographing device and the current attitude information of the handle; and
   according to the current attitude information of the photographing device and the target attitude information, controlling a shaft joint of the handheld gimbal to rotate so that the attitude of the photographing device follows the attitude of the handle.

2. The method according to claim 1, wherein obtaining the current attitude information of the handle comprises:

   obtaining historical attitude information of the photographing device before the rotation of the handheld gimbal, and a rotation angle corresponding to at least one shaft joint respectively on the handheld gimbal in a body coordinate system of the photographing device; and
   obtaining the current attitude information of the handle according to the historical attitude information and the rotation angle.

3. The method according to claim 2, wherein obtaining the current attitude information of the handle according to the historical attitude information and the rotation angle comprises:

   determining a quaternion corresponding to the at least one shaft joint respectively according to the rotation angle corresponding to the at least one shaft joint respectively; and
   according to a quaternion corresponding to the historical attitude information of the photographing device and the quaternion corresponding to the at least one shaft joint, obtaining the current attitude information of the handle.

4. The method according to claim 2, wherein the at least one shaft joint includes: a pitch axis shaft joint, a roll axis shaft joint, and a yaw axis shaft joint.

5. The method according to any one of claims 1 to 4, wherein obtaining the target attitude information of the photographing device according to the current attitude information of the photographing device and the current attitude information of the handle, includes:

   obtaining a follow-up time, the follow-up time being a time interval from an end of the rotation of the handheld gimbal until the attitude of the photographing device follows the attitude of the handle; and
   according to the current attitude information of the photographing device, the current attitude information of the handle, and the follow-up time, obtaining the target attitude information of the photographing device by using an interpolation algorithm.

6. The method according to claim 5, wherein the controlling method includes adjusting the attitude of the photographing device in real time at a preset frequency to follow the attitude of the handle.

7. The method according to claim 5, wherein the interpolation algorithm is a spherical linear interpolation algorithm.

8. The method according to any one of claims 1-7, further comprising:

   obtaining a directional cosine matrix according to the target attitude information;
   obtaining an attitude corresponding to a pitch axis in the body coordinate system of the photographing device according to the directional cosine matrix; and
   according to the target attitude information and the attitude corresponding to the pitch axis, controlling a shaft joint of the handheld gimbal to rotate so that an optical axis of the photographing device is parallel or coincides with an axis of the handle.

9. The method according to claim 8, wherein obtaining the attitude corresponding to the pitch axis in the body coordinate system of the photographing device according to the directional cosine matrix includes:

   obtaining axis vectors of the pitch axis in a geodetic coordinate system according to the directional cosine matrix and axis vectors of the pitch axis in the body coordinate system;
   obtaining a rotation angle of the pitch axis; and
   according to the axis vectors of the pitch axis in the geodetic coordinate system and the rotation angle of the pitch axis, obtaining the attitude corresponding to the pitch axis.

10. The method according to claim 8 or 9, further comprising:

    obtaining an attitude corresponding to a yaw axis in the body coordinate system of the photographing device according to the directional cosine matrix; and
    according to the target attitude information, the attitude corresponding to the pitch axis, and the attitude corresponding to the yaw axis, controlling the shaft joints of the handheld gimbal to rotate, to roll and rotate the photographing device around its optical axis.

11. The method according to claim 10, wherein obtaining the attitude corresponding to the yaw axis in the body coordinate system of the photographing device according to the directional cosine matrix includes:

    obtaining axis vectors of the yaw axis in the geodetic coordinate system according to the directional cosine matrix and axis vectors of the yaw axis in the body coordinate system;

obtaining a rotation angle of the yaw axis; and according to the axis vectors of the yaw axis in the geodetic coordinate system and the rotation angle of the yaw axis, obtaining the attitude corresponding to the yaw axis.

12. The method according to claim 11, wherein obtaining the rotation angle of the yaw axis includes:

obtaining an angular velocity input when a user operates a joystick on the handle; and obtaining the rotation angle of the yaw axis by performing integration by using the angular velocity.

13. The method according to any one of claims 1-12, wherein the target attitude information is intermediate attitude information in a process that the attitude of the photographing device follows the attitude of the handle, or the current attitude information of the handle.

14. A handheld gimbal, comprising: a handle, a gimbal, and a photographing device, wherein:

the gimbal includes a gimbal base and a plurality of shaft joints, each of the plurality of shaft joints includes a motor and a shaft arm connected to and driven by the motor; the handle is connected to the gimbal base; and the photographing device is disposed on the gimbal;
the gimbal also includes a memory and a processor;
the memory is configured to store instructions;
the processor is configured to execute the instructions to implement:

upon rotation of the handheld gimbal, obtaining current attitude information of the photographing device and current attitude information of the handle;
obtaining target attitude information of the photographing device according to the current attitude information of the photographing device and the current attitude information of the handle; and
according to the current attitude information of the photographing device and the target attitude information, controlling a shaft joint of the handheld gimbal to rotate so that the attitude of the photographing device follows the attitude of the handle.

15. The handheld gimbal according to claim 14, wherein the processor is specifically configured to:

obtain historical attitude information of the photographing device before the rotation of the handheld gimbal, and a rotation angle corresponding to at least one shaft joint respectively on the handheld gimbal in a body coordinate system of the photographing device; and
obtain the current attitude information of the handle according to the historical attitude information and the rotation angle.

16. The handheld gimbal according to claim 15, wherein the processor is specifically configured to:

determine a quaternion corresponding to the at least one shaft joint respectively according to the rotation angle corresponding to the at least one shaft joint respectively; and
according to a quaternion corresponding to the historical attitude information of the photographing device and the quaternion corresponding to the at least one shaft joint, obtain the current attitude information of the handle.

17. The handheld gimbal according to claim 15, wherein the at least one shaft joint includes: a pitch axis shaft joint, a roll axis shaft joint, and a yaw axis shaft joint.

18. The handheld gimbal according to any one of claims 14-17, wherein the processor is specifically configured to:

obtain a follow-up time, that the follow-up time is a time interval from an end of the rotation of the handheld gimbal until the attitude of the photographing device follows the attitude of the handle; and
according to the current attitude information of the photographing device, the current attitude information of the handle, and the follow-up time, obtain the target attitude information of the photographing device by using an interpolation algorithm.

19. The handheld gimbal according to claim 18, wherein the processor is configured to adjust the attitude of the photographing device in real time at a preset frequency to follow the attitude of the handle.

20. The handheld gimbal according to claim 18, wherein the interpolation algorithm is a spherical linear interpolation algorithm.

21. The handheld gimbal according to any one of claims 14-20, wherein the processor is further configured to:

obtain a directional cosine matrix according to the target attitude information;
obtain an attitude corresponding to a pitch axis in a body coordinate system of the photographing device according to the directional cosine matrix; and

according to the target attitude information and the attitude corresponding to the pitch axis, control the plurality of shaft joints of the handheld gimbal to rotate so that an optical axis of the photographing device is parallel or coincides with an axis of the handle.

22. The handheld gimbal according to claim 21, wherein the processor is specifically configured to:

obtain axis vectors of the pitch axis in a geodetic coordinate system according to the directional cosine matrix and axis vectors of the pitch axis in the body coordinate system; obtain a rotation angle of the pitch axis; and according to the axis vectors of the pitch axis in the geodetic coordinate system and the rotation angle of the pitch axis, obtain the attitude corresponding to the pitch axis.

23. The handheld gimbal according to claim 21 or 22, wherein the processor is further configured to:

obtain an attitude corresponding to a yaw axis in the body coordinate system of the photographing device according to the directional cosine matrix; and according to the target attitude information, the attitude corresponding to the pitch axis, and the attitude corresponding to the yaw axis, control the plurality of shaft joints of the handheld gimbal to rotate, to roll and rotate the photographing device around its optical axis.

24. The handheld gimbal according to claim 23, wherein the processor is specifically configured to:

obtain axis vectors of the yaw axis in the geodetic coordinate system according to the directional cosine matrix and axis vectors of the yaw axis in the body coordinate system; obtain a rotation angle of the yaw axis; and according to the axis vectors of the yaw axis in the geodetic coordinate system and the rotation angle of the yaw axis, obtain the attitude corresponding to the yaw axis.

25. The handheld gimbal according to claim 24, wherein the processor is specifically configured to:

obtain an angular velocity input when a user operates a joystick on the handle; and obtain the rotation angle of the yaw axis by performing integration by using the angular velocity.

26. The handheld gimbal according to any one of claims 14-25, wherein the target attitude information is intermediate attitude information in a process that the attitude of the photographing device follows the attitude of the handle, or the current attitude information of the handle.

27. A storage medium, comprising: a readable storage medium and a computer program, the computer program being configured to implement the method for controlling a handheld gimbal according to any one of claims 1-13.

FIG. 1

Schematic diagram of working principles of a handheld gimbal

FIG. 2

Upon rotation of a handheld gimbal, obtain current attitude information of a photographing device and current attitude information of a handle  〜301

Obtain target attitude information of the photographing device according to the current attitude information of the photographing device and the current attitude information of the handle  〜302

Control shaft joints of the handheld gimbal to rotate according to the current attitude information of the photographing device and the target attitude information, so that the attitude of the photographing device follows the attitude of the handle  303

FIG. 3

FIG. 4

Optical axis

9

10

(a) (b) (c) (d)

FIG. 5

Optical axis

9

10

(a) (b) (c) (d)

FIG. 6

FIG. 7

FIG. 8

## INTERNATIONAL SEARCH REPORT

| International application No. |
| --- |
| **PCT/CN2018/115756** |

**A. CLASSIFICATION OF SUBJECT MATTER**

G05D 3/20(2006.01)i; F16M 11/16(2006.01)i

According to International Patent Classification (IPC) or to both national classification and IPC

**B. FIELDS SEARCHED**

Minimum documentation searched (classification system followed by classification symbols)

G05D,F16M

Documentation searched other than minimum documentation to the extent that such documents are included in the fields searched

Electronic data base consulted during the international search (name of data base and, where practicable, search terms used)

CNTXT; CNABS; CNKI; VEN: 手柄, 余弦, 俯仰, 云台, 插值, 姿态, 手持, 光轴, 拍摄, 摄像, 照相, 状态, 目标, CLOUD, PLATFORM, CAMERA, HAND??, HELD, HOLD??, YAW, ROLL, PITCH

**C. DOCUMENTS CONSIDERED TO BE RELEVANT**

| Category* | Citation of document, with indication, where appropriate, of the relevant passages | Relevant to claim No. |
| --- | --- | --- |
| X | CN 108259703 A (SHENZHEN QINMO TECHNOLOGY CO., LTD.) 06 July 2018 (2018-07-06)<br>  description, paragraphs [0088]-[0209], and figure 1 | 1-7, 14-20, 27 |
| Y | CN 108259703 A (SHENZHEN QINMO TECHNOLOGY CO., LTD.) 06 July 2018 (2018-07-06)<br>  description, paragraphs [0088]-[0209], and figure 1 | 8-13, 21-26 |
| Y | CN 108253928 A (CHONGQING ZEROTECH CO., LTD.) 06 July 2018 (2018-07-06)<br>  description, paragraphs [0020]-[0046] | 8-13, 21-26 |
| A | CN 107466350 A (SHENZHEN DAJIANG LINGMOU TECHNOLOGY LTD.) 12 December 2017 (2017-12-12)<br>  description | 1-27 |
| A | CN 106764305 A (ZHONGSHAN ZIKE INTELLIGENT TECHNOLOGY CO., LTD.) 31 May 2017 (2017-05-31)<br>  description | 1-27 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **01 July 2019** | **08 July 2019** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2018/115756**

**C.    DOCUMENTS CONSIDERED TO BE RELEVANT**

| Category* | Citation of document, with indication, where appropriate, of the relevant passages | Relevant to claim No. |
|---|---|---|
| A | CN 108184061 A (SHENZHEN QINMO TECHNOLOGY CO., LTD.) 19 June 2018 (2018-06-19) <br>     description | 1-27 |
| A | US 2014101310 A1 (BOX, INC.) 10 April 2014 (2014-04-10) <br>     description | 1-27 |
| A | US 9416914 B1 (FAN, Eagle) 16 August 2016 (2016-08-16) <br>     description | 1-27 |

Form PCT/ISA/210 (second sheet) (January 2015)

**INTERNATIONAL SEARCH REPORT**
**Information on patent family members**

International application No.

**PCT/CN2018/115756**

| Patent document cited in search report | | | Publication date (day/month/year) | Patent family member(s) | | | Publication date (day/month/year) |
|---|---|---|---|---|---|---|---|
| CN | 108259703 | A | 06 July 2018 | None | | | |
| CN | 108253928 | A | 06 July 2018 | None | | | |
| CN | 107466350 | A | 12 December 2017 | WO | 2018023505 | A1 | 08 February 2018 |
| | | | | US | 2019154191 | A1 | 23 May 2019 |
| CN | 106764305 | A | 31 May 2017 | None | | | |
| CN | 108184061 | A | 19 June 2018 | None | | | |
| US | 2014101310 | A1 | 10 April 2014 | None | | | |
| US | 9416914 | B1 | 16 August 2016 | US | 2016230921 | A1 | 11 August 2016 |

Form PCT/ISA/210 (patent family annex) (January 2015)